# EUROPÄISCHE PATENTSCHRIFT

(11) **EP 4 571 284 B1**
(45) Veröffentlichungstag und Bekanntmachung des Hinweises auf die Patenterteilung: **15.04.2026**
(21) Anmeldenummer: 24219466.0
(22) Anmeldetag: 12.12.2024
(51) Int. Cl.: G01M 3/28

(54) **VERFAHREN ZUM PRÜFEN EINES KABELSATZES SOWIE PRÜFVORRICHTUNG**
METHOD FOR TESTING A CABLE SET AND TESTING DEVICE
PROCÉDÉ DE CONTRÔLE D'UN FAISCEAU DE CÂBLES ET DISPOSITIF DE CONTRÔLE

(30) Priorität: 15.12.2023 DE 102023212790
(43) Veröffentlichungstag der Anmeldung: 18.06.2025
(73) Patentinhaber: LEONI Bordnetz-Systeme GmbH, 97318 Kitzingen (DE); LEONI Wiring Systems Slovakia spol. s r.o., 911 01 Trencin (SK)
(72) Erfinder: EGBERS, Andreas, 97340 Marktbreit (DE); MAROSI, Adrian-Dan, 97355 Wiesenbronn (DE); RAHMAN, Mehbub-Ur, 97318 Kitzingen (DE); TERLETSKYY, Andriy, 91101 Trencín (SK)
(74) Vertreter: FDST Patentanwälte

(56) Entgegenhaltungen:
- EP-B1- 3 495 796
- CN-U- 210 141 974
- DE-A1- 102016 102 794

## Beschreibung

Die Erfindung betrifft ein Verfahren zum Prüfen eines Kabelsatzes mittels einer Prüfvorrichtung sowie eine solche Prüfvorrichtung.

Kabelsätze finden regelmäßig Verwendung in Bordnetzen von Kraftfahrzeugen. Ein Kabelsatz verbindet verschiedene Komponenten des Kraftfahrzeugs miteinander und weist hierfür entsprechend eine, typischerweise jedoch mehrere Leitungen auf. Beispiele für Leitungen sind elektrische Leitungen zur Leistungs- und/oder Datenübertragung. Solche elektrischen Leitungen weisen beispielsweise einen oder mehrere Leiter auf, welche von einer oder mehreren Mänteln umgeben sind. Ein anderes Beispiel für Leitungen sind Medienschläuche, mit welchen ein Medium geführt wird. Unabhängig von der konkreten Ausgestaltung der Leitungen sind diese typischerweise endseitig mit einem geeigneten Steckverbinder konfektioniert. Der Kabelsatz selbst ist somit aus mehreren einzelnen Bestandteilen zusammengesetzt, z.B. einem Steckergehäuse (Teil eines Steckverbinders) und einer Leitung mit einem Leitungsmantel, welcher vom Steckergehäuse umschlossen wird. Entsprechend ist es wünschenswert, dass der Kabelsatz insgesamt möglichst dicht ist, speziell gegenüber einem Eindringen von Wasser. Mit anderen Worten: der Kabelsatz soll eine möglichst hohe, zumindest jedoch ausreichende Wasserdichtigkeit aufweisen.

Um bei der Herstellung eines Kabelsatzes dessen Dichtigkeit, insbesondere Wasserdichtigkeit, zu prüfen, wird geeigneterweise eine entsprechend ausgebildete Prüfvorrichtung verwendet. Der Kabelsatz wird an der Prüfvorrichtung angeschlossen und diese führt dann eine Dichtigkeitsprüfung durch, an deren Ende ausgegeben wird, ob der Kabelsatz hinreichend dicht ist (pass) oder nicht (fail).

Beispielsweise sind in EP 3 495 796 B1 eine Vorrichtung und ein Verfahren zum Prüfen einer Ladedose beschrieben. Das Verfahren umfasst die Schritte: Kontaktieren eines gedichteten Steckverbinders eines Leitungsnetzwerks umfassend den gedichteten Steckverbinder, eine Ladedose sowie ein den Steckverbinder und die Ladedose verbindendes Kabel, wobei das Kabel zumindest einen elektrischen Leiter sowie eine den zumindest einen elektrischen Leiter umhüllende Isolierung aufweist; Bereitstellen eines Fluids an dem gedichteten Steckverbinder mittels eines Prüfadapters; Leiten des bereitgestellten Fluids von dem gedichteten Steckverbinder über das Kabel zur Ladedose; Detektieren einer Dichtigkeit der Ladedose und des Leitungsnetzwerks basierend auf dem bereitgestellten Fluid.

Es wird verwiesen auf DE 10 2016 102794 A1 und CN 210 141 974 U.

Vor diesem Hintergrund ist es eine Aufgabe der Erfindung, die Dichtigkeitsprüfung für einen Kabelsatz zu verbessern. Hierzu soll eine geeignete Prüfvorrichtung angegeben werden sowie auch ein Verfahren zum Prüfen eines Kabelsatzes mittels einer solchen Prüfvorrichtung. Die Prüfvorrichtung und das Verfahren sollen insbesondere speziell auf die Prüfung von verschiedenen Kabelsätzen ausgelegt sein.

Die Aufgabe wird erfindungsgemäß gelöst durch ein Verfahren zum Prüfen eines Kabelsatzes mittels einer Prüfvorrichtung, wobei die Prüfvorrichtung wenigstens einen Prüfanschluss aufweist, an welchen der Kabelsatz angeschlossen ist oder wird, wobei die Prüfvorrichtung eine Medienzufuhr aufweist, um durch den Prüfanschluss ein Prüfmedium in den Kabelsatz zu leiten, wobei die Prüfvorrichtung einen Durchflusssensor aufweist, für eine Dichtigkeitsprüfung, wobei der Durchflusssensor in einem Strömungspfad des Prüfmediums angeordnet ist, wobei mittels des Prüfmediums ein Prüfdruck für den Kabelsatz eingestellt wird und danach mit dem Durchflusssensor eine Anzahl an Messwerten zu einer Durchflussrate des Prüfmediums erzeugt wird, wobei anhand der Messwerte eine Dichtigkeit des Kabelsatzes bestimmt wird. Im einfachsten Fall wird die Dichtigkeit als ausreichend (pass) oder mangelhaft (fail) bestimmt. Unter "eine Anzahl an" wird allgemein "wenigstens ein" verstanden. Für den Kabelsatz gelten insbesondere die einleitenden Ausführungen weiter oben.

Die Aufgabe wird außerdem gelöst durch eine Prüfvorrichtung, welche ausgebildet ist zur Durchführung des Verfahrens.

Vorteilhafte Ausgestaltungen, Weiterbildungen und Varianten sind Gegenstand der Unteransprüche. Die Ausführungen im Zusammenhang mit dem Verfahren gelten sinngemäß auch für die Prüfvorrichtung und umgekehrt. Sofern nachfolgend implizit oder explizit Schritte des Verfahrens beschrieben sind, ergeben sich vorteilhafte Ausgestaltungen für die Prüfvorrichtung dadurch, dass diese ausgebildet ist, einen oder mehrere dieser Schritte durchzuführen. Insbesondere hierzu weist die Prüfvorrichtung eine entsprechend ausgebildete Steuereinheit auf.

Das Verfahren dient zum Prüfen eines Kabelsatzes mittels einer Prüfvorrichtung, ist also ein Prüfverfahren. Im Rahmen des Verfahrens wird der Kabelsatz somit mittels des Prüfmediums auf Dichtigkeit geprüft. Der Durchflusssensor ist in einem Strömungspfad des Prüfmediums angeordnet und misst demnach die Menge an Prüfmedium, welche während der Dichtigkeitsprüfung in den Kabelsatz und somit auch durch den Durchflusssensor strömt. Mittels des Prüfmediums wird in einem ersten Schritt der Prüfdruck eingestellt und danach wird in einem zweiten Schritt mit dem Durchflusssensor die Durchflussrate des Prüfmediums gemessen. Der Durchflusssensor wird insbesondere von einer Steuereinheit der Prüfvorrichtung entsprechend angesteuert. Die Messwerte werden auch von der Steuereinheit entgegengenommen und von dieser ausgewertet.

Das Prüfmedium ist vorzugsweise Luft, insbesondere unabhängig davon, welchem Medium der Kabelsatz beim späteren, bestimmungsgemäßen Gebrauch konkret ausgesetzt ist. Die Medienzufuhr wird entsprechend auch als Hauptluftzufuhr bezeichnet. Das Prüfmedium strömt generell entlang des Strömungspfads in einer Strömungsrichtung durch die Prüfvorrichtung und in den Kabelsatz hinein.

Die Dichtigkeitsprüfung umfasst insbesondere, dass die Dichtigkeit bestimmt wird, d.h. dass ein oder mehrere Messwerte zur Durchflussrate erzeugt werden, und anhand dessen die Dichtigkeit bestimmt wird. Für die Dichtigkeitsprüfung (aber nicht zwingend als Teil davon) wird der Kabelsatz zunächst möglichst abgedichtet an den Prüfanschluss angeschlossen, sodass bei der späteren Dichtigkeitsprüfung über diesen selbst möglichst kein Prüfmedium aus dem Kabelsatz austreten kann. Hierbei ist der Prüfanschluss zweckmäßigerweise von der Medienzufuhr getrennt, sodass noch kein Prüfmedium in Richtung des Kabelsatzes strömt. Die Dichtigkeitsprüfung erfolgt dann bevorzugterweise mittels einem oder mehrerer der folgenden Schritte: zuerst wird in dem oben bereits genannten ersten Schritt der Prüfdruck eingestellt, z.B. indem in einem ersten Zeitraum zuerst ein Fülldruck eingestellt wird, welcher dann anschließend auf den Prüfdruck abfällt. Hierzu wird über den ersten Zeitraum der Prüfanschluss mit der Medienzufuhr insbesondere mittels eines Schaltventils derart verbunden, dass das Prüfmedium in den Kabelsatz einströmt und sich dadurch zunächst der Fülldruck einstellt (dies wird auch als "Füllzeit" bezeichnet). Danach wird zur Stabilisierung des Drucks innerhalb des Kabelsatzes einfach gewartet (dies wird auch als "Stabilisierungszeit" bezeichnet). Typischerweise fällt der Druck innerhalb des Kabelsatzes während ausgehend vom Fülldruck leicht ab, d.h. insbesondere um 5 % bis 15 %. Alternativ ist der Prüfdruck einfach identisch zum Fülldruck und die Stabilisierung entfällt. Am Ende des ersten Zeitraums hat sich dann jedenfalls der Prüfdruck eingestellt. Der erste Zeitraum dient insbesondere vorrangig dazu, eine homogene Strömung des Prüfmediums in den Kabelsatz einzustellen. Der erste Zeitraum ist insbesondere wenige Sekunden lang, z.B. 8 s, mit je 4 s Füllzeit und Stabilisierungszeit. Anschließend wird nun während eines zweiten Zeitraums mit dem Durchflusssensor die Durchflussrate wenigstens einmal, vorzugsweise aber wiederkehrend, besonders bevorzugt kontinuierlich gemessen und vom Durchflusssensor werden entsprechende Messwerte als Funktion der Zeit ausgegeben. Der zweite Zeitraum wird daher auch als "Messzeit" bezeichnet. Die während oder am Ende der Messzeit gemessenen Messwerte werden dann zur Bestimmung der Dichtigkeit verwendet. Die Messzeit dauert typischerweise länger als der erste Zeitraum, ist z.B. eine Größenordnung länger und dauert 10 s bis 100 s.

Geeigneterweise wird die Dichtigkeit auch bewertet und dabei eine Bewertung erzeugt, welche von der Prüfvorrichtung ausgegeben wird. Beispielsweise wird die Dichtigkeit durch einen Vergleich mit einem Grenzwert bewertet. Je nach Ergebnis des Vergleichs wird dann eine Bewertung erzeugt, welche z.B. lediglich angibt, ob der Kabelsatz die Dichtigkeitsprüfung bestanden hat, also eine ausreichende Dichtigkeit aufweist (pass), oder nicht, d.h. eine mangelhafte Dichtigkeit aufweist (fail). Die Bewertung wird dann mit einem Ausgabeelement (z.B. Leuchte, Lautsprecher, Bildschirm usw.) der Prüfvorrichtung ausgeben.

Im Rahmen der Dichtigkeitsprüfung wird die Dichtigkeit somit letztendlich anhand der Durchflussrate bestimmt und dadurch effektiv eine Leckagemessung durchgeführt. Dem liegt die Überlegung zugrunde, dass bei mangelnder Dichtigkeit des Kabelsatzes das Prüfmedium fortlaufend aus dem Kabelsatz entweicht und dadurch ein kontinuierlicher Zustrom von Prüfmedium möglich ist, welcher bei einem entsprechend eingestellten Prüfdruck auch vorliegt. Daraus ergibt sich eine entsprechend nicht verschwindende Durchflussrate (auch als "Leckrate" bezeichnet), d.h. diese ist größer als 0 ml/min. Im Gegensatz dazu würde bei einem perfekt dichten Kabelsatz keinerlei Prüfmedium entweichen und sich nach vollständiger Befüllung des Kabelsatzes eine Durchflussrate von 0 ml/min einstellen. Die Durchflussrate, welche nach einer bestimmten Zeit (insbesondere nach der Messzeit) erreicht wird, ist entsprechend ein Maß für die Dichtigkeit. Grundsätzlich ist somit auch bereits ein einzelner Messwert ausreichend, z.B. am Ende der Messzeit.

Zweckmäßigerweise wird als Grenzwert zur Bewertung der Dichtigkeit ein von Null verschiedener Wert gewählt, z.B. 1,8 ml/min. Unterschreitet die Durchflussrate den Grenzwert innerhalb der Messzeit, dann ist der Kabelsatz hinreichend dicht (pass), andernfalls nicht (fail).

Der Durchflusssensor nutzt in einer geeigneten Ausgestaltung zur Messung ein Messverfahren, welches auf einem thermischen Wärmeübertragungsverfahren (heat transfer) beruht. Dabei wird ein kontrolliert beheizter Temperatursensor von dem Prüfmedium über- oder umströmt und dadurch je nach Durchflussrate entsprechend mehr oder weniger abgekühlt. Mit diesem Effekt wird dann ein Messwert erzeugt, welcher mit entsprechender Eichung die tatsächliche Durchflussrate angibt.

Die Dichtigkeitsprüfung erfolgt vorzugsweise mit einem Prüfdruck von maximal 1 bar (Niederdruck), vorzugsweise im Bereich von 100 mbar bis 500 mbar, z.B. 200 mbar.

Die Dichtigkeitsprüfung mittels Durchflusssensor wie beschrieben ist besonders einfach, da zur Bestimmung der Dichtigkeit und zu deren Bewertung keine komplizierte Berechnung erforderlich ist. Außerdem ist die Zeit, welche für die Prüfung insgesamt benötigt wird, besonders kurz. Weiterhin wird eine besonders hohe Messgenauigkeit erzielt, mit welcher auch kleinere Leckagen erkennbar sind, speziell aufgrund lediglich punktueller Beschädigungen des Kabelsatzes.

Grundsätzlich ist es denkbar, für eine Dichtigkeitsprüfung eine allgemeine Prüfvorrichtung z.B. für eine Laborumgebung zu verwenden. Solche Prüfvorrichtungen, sind jedoch typischerweise teuer, wenig robust, erfordern eine regelmäßige Wartung, weisen einen breiteren Messbereich auf, als für die Prüfung von Kabelsätzen erforderlich ist, und lassen einige für die Prüfung von Kabelsätzen wünschenswerte Funktionen vermissen. Zugleich sind die Umgebungsbedingungen bei der Herstellung von Kabelsätzen im Vergleich zu einer Laboranwendung eher harsch.

Vorzugsweise weist der Durchflusssensor insbesondere maximal einen Messbereich von 2 ml/min bis 100 ml/min aufweist, bevorzugt von 2,5 ml/min bis 25 ml/min. Vorliegend wurde erkannt, dass in 90% der Fälle eine Dichtigkeitsprüfung lediglich im Bereich von 2,5 ml/min bis 25 ml/min ausreichend ist. Durch eine entsprechende Beschränkung ist es dann möglich, einen besonders kostengünstigen und insbesondere auch lediglich einen einzelnen Durchflusssensor zu verwenden.

Die Prüfvorrichtung weist zweckmäßigerweise ein Schaltventil auf, zur Steuerung der Zufuhr des Prüfmediums. Das Schaltventil wird geöffnet, um die Dichtigkeitsprüfung zu starten. Nach Abschluss der Dichtigkeitsprüfung wird das Schaltventil insbesondere wieder geschlossen. Während des ersten Zeitraums zur Einstellung des Prüfdrucks ist das Schaltventil insbesondere geöffnet. Auch während des zweiten Zeitraums zur Messung der Durchflussrate ist das Schaltventil insbesondere geöffnet, sodass fortlaufend Prüfmedium nachströmen kann. Während der Messzeit stellt sich dann insbesondere ein Gleichgewicht ein, bei welchem der Zustrom an Prüfmedium in den Kabelsatz genau dem Abstrom an Prüfmedium durch etwaige Leckagen des Kabelsatzes entspricht. Das Schaltventil wird insbesondere von der Steuereinheit der Prüfvorrichtung entsprechend angesteuert, d.h. geöffnet und geschlossen.

Der Durchflusssensor ist geeigneterweise entlang des Strömungspfads zwischen dem Schaltventil und dem wenigstens einen Prüfanschluss angeordnet. Mit anderen Worten: der Durchflusssensor ist stromab des Schaltventils und stromauf des Prüfanschlusses angeordnet.

Vorliegend wurde erkannt, dass speziell das Einstellen des Prüfdrucks während des ersten Zeitraums vorteilhaft eine zusätzliche Prüfung des Kabelsatzes auf etwaige Blockaden (z.B. Knickstelle oder Druckstelle) ermöglicht. Dem liegt die Beobachtung zugrunde, dass der Kabelsatz zunächst während des ersten Zeitraums mit dem Prüfmedium gefüllt werden muss, wodurch sich am Durchflusssensor eine entsprechend hohe Durchflussrate ergibt, z.B. bis zu 100 ml/min bei einem Prüfdruck von 200 mbar. Da der Kabelsatz grundsätzlich langgestreckt ausgebildet ist und auch Hohlräume aufweisen kann, welche nicht direkt am Prüfanschluss angeschlossen sind, sondern von diesem weit entfernt liegen, muss das Prüfmedium zunächst einen gewissen Weg durch den Kabelsatz zurücklegen, um diesen schließlich vollständig auszufüllen. Liegt auf diesem Weg eine Blockade vor, z.B. weil der Kabelsatz nicht korrekt in der Prüfvorrichtung montiert ist und lokal zusammengedrückt, geknickt oder gequetscht ist, dann wird das weitere Einströmen des Prüfmediums durch diese Blockade verhindert, wodurch sich das Prüfvolumen (d.h. das mit dem Prüfmedium füllbare Volumen) im Schlauch verringert. Entsprechend wird vorliegend vor oder zu Beginn der Messzeit (des zweiten Zeitraums) während eines initialen Zeitintervalls der Kabelsatz insbesondere mit dem Prüfmedium gefüllt und jedenfalls eine Absenkung der Durchflussrate bestimmt. Mit anderen Worten: vor oder zu Beginn der Messzeit wird ein initiales Einströmen des Prüfmediums in den Kabelsatz überwacht und quantifiziert und z.B. mit einem Grenzwert verglichen. Generell wird zu Beginn ein starker Anstieg erwartet, danach dann eine Absenkung der Durchflussrate. Falls eine Blockade vorliegt, sinkt die Durchflussrate dann deutlich schneller als ohne eine Blockade, die Absenkung ist also deutlich größer. Das initiale Zeitintervall ist vorzugsweise ein Teil der bereits genannten Messzeit. Bereits während des initialen Zeitintervalls wird dann schon die Durchflussrate gemessen, jedoch nicht für die eigentliche Dichtigkeitsprüfung, sondern für eine dieser vorausgehende Blockadeprüfung. Anhand der Absenkung der Durchflussrate wir dann ermittelt, ob der Kabelsatz eine Blockade aufweist, welche ein vollständiges Befüllen mit dem Prüfmedium verhindert (Blockadeprüfungsfunktion). Hierzu wird beispielsweise die Absenkung (z.B. als negative Steigung, d.h. Änderung auf einen bestimmten Zeitintervall) der Durchflussrate als Funktion der Zeit gemessen. Die Absenkung wird dann mit einem Grenzwert verglichen und je nachdem, ob die Absenkung größer oder kleiner als dieser Grenzwert ist, wird auf eine Blockade geschlossen (größer als Grenzwert) oder nicht (kleiner als Grenzwert) und von der Prüfvorrichtung ein entsprechender Hinweis ausgegeben.

In einer geeigneten Variante wird alternativ oder zusätzlich zu Beginn der Dichtigkeitsprüfung während eines initialen Zeitintervalls der Kabelsatz mit dem Prüfmedium gefüllt und dabei ein Anstieg der Durchflussrate bestimmt. Mit anderen Worten: zu Beginn der Dichtigkeitsprüfung wird ein initiales Einströmen des Prüfmediums in den Kabelsatz überwacht und quantifiziert und z.B. mit einem Grenzwert verglichen. Generell wird zu Beginn ein starker Anstieg erwartet, ansonsten liegt vermutlich eine Blockade vor. Das initiale Zeitintervall ist vorzugsweise ein Teil des bereits genannten ersten Zeitraums zur Einstellung des Prüfdrucks und entspricht in einer geeigneten Ausgestaltung der Füllzeit bis zum Erreichen des Fülldrucks. Insbesondere beginnt das initiale Zeitintervall mit dem Öffnen des Schaltventils, d.h. allgemein mit dem Beginn der Dichtigkeitsprüfung, und endet dann z.B. mit Erreichen des Fülldrucks, eine etwaige Stabilisierung bleibt also insbesondere unberücksichtigt. Bereits während des initialen Zeitintervalls wird dann schon die Durchflussrate gemessen, jedoch nicht für die eigentliche Dichtigkeitsprüfung, sondern für eine dieser vorausgehende Blockadeprüfung. Anhand des Anstiegs der Durchflussrate wir dann ermittelt, ob der Kabelsatz eine Blockade aufweist, welche ein vollständiges Befüllen mit dem Prüfmedium verhindert (Blockadeprüfungsfunktion). Hierzu wird beispielsweise die Steigung der Durchflussrate als Funktion der Zeit gemessen oder nach welcher Zeit ein Maximum erreicht wird. Die Steigung, die Zeit oder das erreichte Maximum wird dann mit einem Grenzwert verglichen und je nachdem, ob dieser größer oder kleiner ist, wird auf eine Blockade geschlossen oder nicht und von der Prüfvorrichtung ein entsprechender Hinweis ausgegeben.

Um möglichst verschiedene Kabelsätze mit derselben Prüfvorrichtung prüfen zu können, weist diese geeigneterweise mehrere Prüfanschlüsse auf, an welche der Kabelsatz je nach Ausgestaltung desselben dann angeschlossen wird, wobei dann nur solche Prüfanschlüsse freigeschaltet und während der Dichtigkeitsprüfung verwendet werden, an welche der Kabelsatz auch tatsächlich angeschlossen ist. In einer vorteilhaften Ausgestaltung weist die Prüfvorrichtung dann mehrere Auswahlventile auf und mehrere Prüfanschlüsse, welche mittels der Auswahlventile freischaltbar sind, um das Prüfmedium zum jeweiligen Prüfanschluss zu leiten. Der Kabelsatz ist dann lediglich an eine Teilanzahl der Prüfanschlüsse angeschlossen und mittels der Auswahlventile werden vor Beginn der Dichtigkeitsprüfung lediglich diejenigen Prüfanschlüsse freigeschaltet, an welche der Kabelsatz angeschlossen ist. Das Prüfmedium wird dann nur den freigeschalteten Prüfanschlüssen zugeführt, die übrigen Prüfanschlüsse bleiben von der Medienzufuhr getrennt. Zweckmäßigerweise erkennt die Prüfvorrichtung automatisch, ob an einem jeweiligen Prüfanschluss ein Kabelsatz angeschlossen ist, z.B. mittels eines Präsenzsensors, welcher ein entsprechendes Präsenzsignal an die Steuereinheit ausgibt, wenn an dem zugehörigen Prüfanschluss ein Kabelsatz angeschlossen ist. Alternativ werden die Auswahlventile manuell geschaltet oder in die Steuereinheit wird eingeben, welcher Kabelsatz geprüft werden soll und dann aus einer Datenbank entnommen, welche Prüfanschlüsse hierfür freigeschaltet sein sollen und diese werden dann freigeschaltet. Die Prüfvorrichtung ermöglicht demnach insgesamt eine Auswahl der zu verwendenden Prüfanschlüsse (Auswahlfunktion) und ist somit besonders flexibel zur Prüfung unterschiedlicher Kabelsätze einsetzbar. Mit derselben Prüfvorrichtung können dann an derselben Arbeitsstation unterschiedliche Kabelsätze geprüft werden.

Geeigneterweise sind zumindest zwei der Prüfanschlüsse mittels desselben Auswahlventils freischaltbar, d.h. ein einzelnes Auswahlventil schaltet mehrere Prüfanschlüsse. Hierdurch wird zwar die Flexibilität etwas eingeschränkt, jedoch wird auch die Anzahl der benötigten Auswahlventile begrenzt und die Prüfvorrichtung entsprechend kostengünstiger, zugleich vereinfacht sich die Steuerung. Beispielsweise weist die Prüfvorrichtung ein oder mehrere (z.B. vier) Auswahlventile auf, welche jeweils mit zwei Prüfanschlüssen verbunden sind, sodass immer je zwei Prüfanschlüsse mit einem einzelnen Auswahlventil freischaltbar sind. Dies ist besonders vorteilhaft, wenn bei einem Kabelsatz beide Enden einer jeweiligen Leitung an die Prüfvorrichtung angeschlossen werden. Da eine jeweilige Leitung typischerweise zwei Enden aufweist, wird auch nur eine gerade Anzahl an Prüfanschlüssen benötigt.

Vor der eigentlichen Dichtigkeitsprüfung ist es vorteilhaft, die Prüfvorrichtung selbst auf deren korrekte Funktionalität zu prüfen und insbesondere sicherzustellen, dass Kabelsätze mit mangelhafter Dichtigkeit zuverlässig erkannt werden. Daher ist in einer vorteilhaften Ausgestaltung der Kabelsatz ein Referenzkabelsatz, welcher eine mangelhafte Dichtigkeit aufweist, und die Prüfvorrichtung wird erst dann zur Prüfung weiterer Kabelsätze freigegeben, wenn im Rahmen der Dichtigkeitsprüfung an dem Referenzkabelsatz dessen mangelhafte Dichtigkeit erfolgreich erkannt wurde. Dies wird auch als "Freigabetest zur Freigabe der Prüfvorrichtung" bezeichnet. Vor der Dichtigkeitsprüfung an einem tatsächlichen Kabelsatz wird demnach an einem Referenzkabelsatz eine Referenzprüfung durchgeführt (Freigabetestfunktion). Der Referenzkabelsatz wird auch als "bad sample" oder "golden sample" bezeichnet. Der Referenzkabelsatz weist vorsätzlich eine mangelhafte Dichtigkeit auf, welche derart gestaltet ist, dass die Prüfvorrichtung diese bei korrekter Funktionalität als solche erkennt (also "fail" ausgibt). Der Freigabetest wird beispielsweise immer zum Schichtwechsel bei der Übergabe der Prüfvorrichtung von einem zum nächsten Arbeiter durchgeführt.

Zweckmäßigerweise weist die Prüfvorrichtung ein Proportionalventil auf, mit welchem der Prüfdruck eingestellt wird. Das Proportionalventil ist im Strömungspfad insbesondere zwischen der Medienzufuhr und dem Schaltventil angeordnet. Mit dem Proportionalventil wird je nach Bedarf der Druck, welcher von der Medienzufuhr bereitgestellt wird, auf denjenigen Druck reduziert, welcher für die Dichtigkeitsprüfung eingestellt werden soll. Das Proportionalventil wird hierfür entsprechend insbesondere von der Steuereinheit gesteuert. Auf einen Präzisionsregler zum Einstellen des Prüfdrucks wird insbesondere verzichtet, ein solcher ist nicht erforderlich und auch nicht vorhanden. Optional ist aber im Strömungspfad zwischen der Medienzufuhr und dem Proportionalventil noch ein manuelles Ventil (z.B. mit Manometer) angeordnet, mit welchem der Druck von der Medienzufuhr zunächst grob vorreduziert wird, um dann mit dem Proportionalventil automatisiert feineingestellt zu werden. Beispielsweise stellt die Medienzufuhr einen Druck von 6 bar zur Verfügung, welcher mit dem manuellen Ventil auf ca. 1 bar vorreduziert wird, um dann mittels des Proportionalventils besonders exakt auf einen Prüfdruck unterhalb von 1 bar reduziert zu werden.

Eine Aufgabe des Proportionalventils ist es insbesondere, einen stabilen Prüfdruck zu erzeugen. Das Proportionalventil ist in einer geeigneten Ausgestaltung ein Stetigventil, welches z.B. mit einem Proportionalmagneten nicht nur diskrete Schaltstellungen zulässt, sondern einen stetigen Übergang des Öffnungsgrads von offen zu geschlossen und/oder umgekehrt. Das Proportionalventil eignet sich besonders für Anwendungen, in welchen ein veränderlicher Volumenstrom gefordert ist, wie bei dem hier beschriebenen Prüfverfahren. Das Proportionalventil weist insbesondere eine nichtlineare Volumenstromkennlinie auf.

Vorzugsweise weist die Prüfvorrichtung entlang des Strömungspfads eine Druckflasche auf, zur Stabilisierung des Prüfmediums und/oder zur Reduktion von Turbulenzen. Die Druckflasche ist zweckmäßigerweise stromauf des Schaltventils angeordnet und stromab des Proportionalventils. Die Druckflasche hat geeigneterweise ein Volumen im Bereich von 50 ml bis 500 ml, z.B. 100 ml.

Geeigneterweise weist die Prüfvorrichtung einen Verriegelungsmechanismus auf, mit welchem der Kabelsatz am Prüfanschluss während der Dichtigkeitsprüfung verriegelt wird. Der Verriegelungsmechanismus ist geeigneterweise an die Medienzufuhr angeschlossen und wird mittels des Prüfmediums betätigt. Vorteilhafterweise ist der Verriegelungsmechanismus ein Teil eines Sicherheitsmechanismus der Prüfvorrichtung, welcher ausgebildet ist, ein Entfernen, z.B. Abziehen, des Kabelsatzes vom Prüfanschluss während der Prüfung zu verhindern oder zumindest gefahrlos durchzuführen.

In einer zweckmäßigen Ausgestaltung weist die Prüfvorrichtung für einen jeweiligen Prüfanschluss einen Präsenzsensor auf, welcher ein Präsenzsignal ausgibt, falls der Kabelsatz an dem jeweiligen Prüfanschluss angeschlossen ist. Unabhängig vom Vorhandensein eines Sicherheitsmechanismus wird mit dem Verriegelungsmechanismus der Kabelsatz an dem jeweiligen Prüfanschluss verriegelt, d.h. gegen Entfernen gesichert. Der Verriegelungsmechanismus weist hierfür insbesondere für jeden Prüfanschluss ein Verriegelungselement auf. Das Verriegelungselement ist in einer geeigneten Ausgestaltung ein Hakenzylinder. Mit "Verriegeln" ist insbesondere nicht gemeint, dass der Prüfanschluss für das Prüfmedium geöffnet oder geschlossen wird, um dieses in den Kabelsatz hinein oder aus diesem heraus strömen zu lassen, dies wird bei Bedarf geeigneterweise mittels eines entsprechenden Schaltventils realisiert. Zweckmäßigerweise wird insbesondere mit der Steuereinheit gemessen, ob und welche Präsenzsignale vorliegen und der Verriegelungsmechanismus entsprechend betätigt, sodass der Kabelsatz während der Dichtigkeitsprüfung verriegelt ist. Die Präsenzsignale werden insbesondere von der Steuereinheit empfangen und ausgewertet und diese steuert dann den Verriegelungsmechanismus entsprechend. Das Präsenzsignal ist beispielsweise eine einfache elektrische Spannung, welche von dem entsprechenden Präsenzsensor ausgegeben wird.

In einer zweckmäßigen Ausgestaltung weist der Verriegelungsmechanismus für jeden Prüfanschluss jeweils ein Verriegelungselement (wie oben bereits genannt) auf und ein Schließventil, d.h. für jedes Verriegelungselement ein eigenes Schließventil. Zum Verriegeln des Kabelsatzes wird ein jeweiliges Schließventil geöffnet und dadurch das jeweilige Verriegelungselement mittels des Prüfmediums betätigt. Demnach wird zum Verriegeln des Kabelsatzes vorzugsweise Luft genutzt, insbesondere Druckluft, alternativ wird das Verriegelungselement elektrisch betätigt. Eine Entriegelung erfolgt entsprechend umgekehrt.

Nachfolgend werden Ausführungsbeispiele der Erfindung anhand einer Zeichnung näher erläutert. Darin zeigen jeweils schematisch:
Fig. 1 ein Verfahren zum Prüfen eines Kabelsatzes,
Fig. 2 eine Prüfvorrichtung für das Verfahren aus Fig. 1,
Fig. 3 die Durchflussrate als Funktion der Zeit.

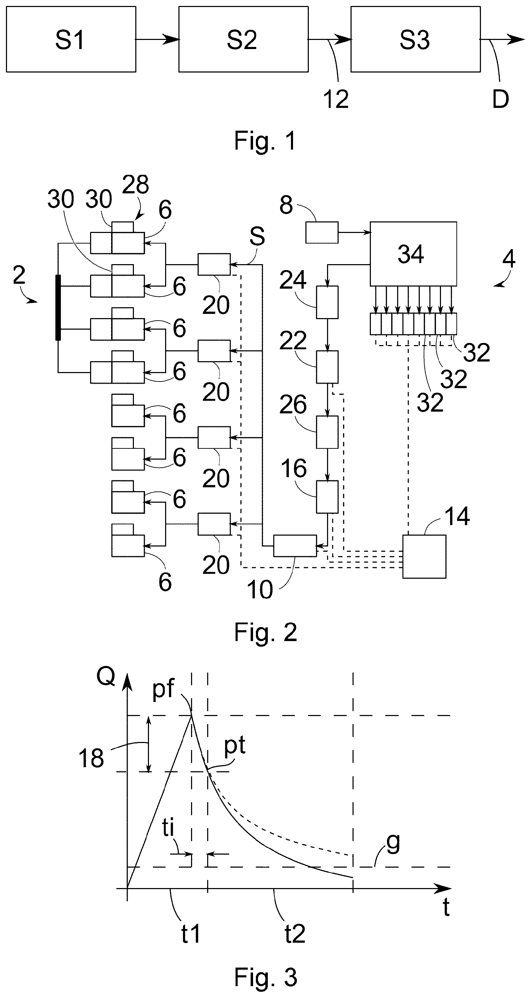

In Fig. 1 ist ein Ausführungsbeispiel für ein Verfahren zum Prüfen eines Kabelsatzes 2 mittels einer Prüfvorrichtung 4 gezeigt. Ein Ausführungsbeispiel für die Prüfvorrichtung 4 ist in Fig. 2 gezeigt. Die Prüfvorrichtung 4 weist wenigstens einen Prüfanschluss 6 auf, an welchen der Kabelsatz 2 angeschlossen ist oder wird. Der hier exemplarisch dargestellte Kabelsatz 2 weist zwei Leitungen auf, welche jeweils zwei Enden mit je einem Steckverbinder aufweisen (nicht explizit bezeichnet) und ist an vier der insgesamt acht Prüfanschlüsse 6 angeschlossen. Die Prüfvorrichtung 4 weist zudem eine Medienzufuhr 8 auf, um durch den Prüfanschluss 6 ein Prüfmedium, vorliegend Luft, in den Kabelsatz 2 zu leiten. Weiterhin weist die Prüfvorrichtung 4 einen Durchflusssensor 10 auf, für eine Dichtigkeitsprüfung. Der Durchflusssensor 10 ist in einem Strömungspfad S des Prüfmediums angeordnet. Mittels des Prüfmediums wird in einem ersten Schritt S1 ein Prüfdruck pt für den Kabelsatz 2 eingestellt und danach in einem zweiten Schritt S2 mit dem Durchflusssensor 10 eine Anzahl an Messwerten 12 zu einer Durchflussrate Q des Prüfmediums erzeugt. Anhand der Messwerte 12 wird in einem dritten Schritt S3 eine Dichtigkeit D des Kabelsatzes 2 bestimmt. Der Durchflusssensor 10 wird von einer Steuereinheit 14 der Prüfvorrichtung 4 angesteuert. Die Messwerte 12 werden auch von der Steuereinheit 14 entgegengenommen und von dieser ausgewertet.

Die Dichtigkeitsprüfung umfasst, dass die Dichtigkeit D bestimmt wird, d.h. dass ein oder mehrere Messwerte 12 zur Durchflussrate Q erzeugt werden, und anhand dessen die Dichtigkeit D bestimmt wird. Für die Dichtigkeitsprüfung (aber nicht zwingend als Teil davon) wird der Kabelsatz 2 zunächst an den Prüfanschluss 6 angeschlossen. Hierbei ist der Prüfanschluss 6 von der Medienzufuhr 8 getrennt, sodass noch kein Prüfmedium in Richtung des Kabelsatzes 2 strömt. Die Dichtigkeitsprüfung erfolgt dann mittels der folgenden Schritte: zuerst wird in dem ersten Schritt S1 der Prüfdruck pt eingestellt. Ein Ausführungsbeispiel hierfür wird mit Verweis auf Fig. 3, welche die Durchflussrate Q als Funktion der Zeit t zeigt, nachfolgend erläutert: in einem ersten Zeitraum t1 wird zuerst ein Fülldruck pf eingestellt wird, welcher dann anschließend auf den Prüfdruck pt abfällt. Hierzu wird über den ersten Zeitraum t1 der Prüfanschluss 6 mit der Medienzufuhr 8 mittels eines Schaltventils 16 derart verbunden, dass das Prüfmedium in den Kabelsatz 2 einströmt und sich dadurch zunächst der Fülldruck pf einstellt (dies wird auch als "Füllzeit" bezeichnet). Danach wird zur Stabilisierung des Drucks innerhalb des Kabelsatzes 2 einfach gewartet (dies wird auch als "Stabilisierungszeit" bezeichnet). Typischerweise fällt der Druck innerhalb des Kabelsatzes 2 während ausgehend vom Fülldruck pf leicht ab. Alternativ ist der Prüfdruck pt einfach identisch zum Fülldruck pf und die Stabilisierung entfällt (nicht gezeigt). Am Ende des ersten Zeitraums t1 hat sich dann jedenfalls der Prüfdruck pt eingestellt. Der erste Zeitraum t1 dient vorrangig dazu, eine homogene Strömung des Prüfmediums in den Kabelsatz 2 einzustellen. Der erste Zeitraum t1 ist wenige Sekunden lang, hier beispielhaft 8 s, mit je 4 s Füllzeit und Stabilisierungszeit. Anschließend wird nun im zweiten Schritt S2 während eines zweiten Zeitraums t2 mit dem Durchflusssensor 10 die Durchflussrate Q einmal oder wiederkehrend, z.B. kontinuierlich, gemessen und vom Durchflusssensor 10 werden entsprechende Messwerte 12 als Funktion der Zeit t ausgegeben. Der zweite Zeitraum t2 wird daher auch als "Messzeit" bezeichnet. Die während oder am Ende der Messzeit gemessenen Messwerte 12 werden dann im dritten Schritt S3 zur Bestimmung der Dichtigkeit D verwendet. Die Messzeit dauert typischerweise länger als der erste Zeitraum t1, dauert z.B. 40 s.

Vorliegend wird die Dichtigkeit D im dritten Schritt S3 auch bewertet und dabei eine Bewertung erzeugt, welche von der Prüfvorrichtung 4 ausgegeben wird (nicht gezeigt). Beispielsweise wird die Dichtigkeit D durch einen Vergleich mit einem Grenzwert g bewertet, z.B. wie in Fig. 3 erkennbar. Je nach Ergebnis des Vergleichs wird dann eine Bewertung erzeugt, welche z.B. lediglich angibt, ob der Kabelsatz 2 die Dichtigkeitsprüfung bestanden hat, also eine ausreichende Dichtigkeit D aufweist (pass, in Fig. 3 die durchgezogene Linie), oder nicht, d.h. eine mangelhafte Dichtigkeit D aufweist (fail, in Fig. 3 die gestrichelte Linie).

Im Rahmen der Dichtigkeitsprüfung wird die Dichtigkeit D somit letztendlich anhand der Durchflussrate Q bestimmt und dadurch effektiv eine Leckagemessung durchgeführt. Dem liegt die Überlegung zugrunde, dass bei mangelnder Dichtigkeit D des Kabelsatzes 2 das Prüfmedium fortlaufend aus dem Kabelsatz 2 entweicht und dadurch ein kontinuierlicher Zustrom von Prüfmedium möglich ist, welcher bei einem entsprechend eingestellten Prüfdruck pt auch vorliegt. Daraus ergibt sich eine entsprechend nicht verschwindende Durchflussrate Q (auch als "Leckrate" bezeichnet), d.h. diese ist größer als 0 ml/min, wie in Fig. 3 beispielhaft gezeigt ist. Im Gegensatz dazu würde bei einem perfekt dichten Kabelsatz 2 keinerlei Prüfmedium entweichen und sich nach vollständiger Befüllung des Kabelsatzes 2 eine Durchflussrate Q von 0 ml/min einstellen. Die Durchflussrate Q, welche nach der Messzeit t2 erreicht wird, ist entsprechend ein Maß für die Dichtigkeit D. Grundsätzlich ist somit auch bereits ein einzelner Messwert 12 ausreichend, z.B. am Ende der Messzeit t2.

Als Grenzwert g zur Bewertung der Dichtigkeit D wird vorliegend ein von Null verschiedener Wert gewählt, z.B. 1,8 ml/min. Unterschreitet die Durchflussrate Q den Grenzwert g innerhalb der Messzeit t2, dann ist der Kabelsatz 2 hinreichend dicht (pass), andernfalls nicht (fail).

Die hier gezeigte Prüfvorrichtung 4 weist ein Schaltventil 16 auf, zur Steuerung der Zufuhr des Prüfmediums M. Das Schaltventil 16 wird geöffnet, um die Dichtigkeitsprüfung zu starten. Nach Abschluss der Dichtigkeitsprüfung wird das Schaltventil 16 wieder geschlossen. Während des ersten Zeitraums t1 zur Einstellung des Prüfdrucks pt ist das Schaltventil 16 geöffnet. Auch während des zweiten Zeitraums t2 zur Messung der Durchflussrate Q ist das Schaltventil 16 geöffnet, sodass fortlaufend Prüfmedium nachströmen kann. Während der Messzeit t2 stellt sich dann ein Gleichgewicht ein, bei welchem der Zustrom an Prüfmedium in den Kabelsatz 2 genau dem Abstrom an Prüfmedium durch etwaige Leckagen des Kabelsatzes 2 entspricht. Das Schaltventil 16 wird von der Steuereinheit 14 der Prüfvorrichtung 4 entsprechend angesteuert, d.h. geöffnet und geschlossen.

Der Durchflusssensor 10 ist im gezeigten Ausführungsbeispiel entlang des Strömungspfads S zwischen dem Schaltventil 16 und dem Prüfanschluss 6 angeordnet.

Während des ersten Zeitraums t1 muss der Kabelsatz 2 zunächst mit dem Prüfmedium gefüllt werden, wodurch sich am Durchflusssensor 10 eine entsprechend hohe Durchflussrate Q ergibt, z.B. bis zu 100 ml/min bei einem Prüfdruck von 200 mbar, wie in Fig. 3 erkennbar ist. Da der Kabelsatz 2 grundsätzlich langgestreckt ausgebildet ist und auch Hohlräume aufweisen kann, welche nicht direkt am Prüfanschluss 6 angeschlossen sind, sondern von diesem weit entfernt liegen, muss das Prüfmedium zunächst einen gewissen Weg durch den Kabelsatz 2 zurücklegen, um diesen schließlich vollständig auszufüllen. Liegt auf diesem Weg eine Blockade vor, z.B. weil der Kabelsatz 2 nicht korrekt in der Prüfvorrichtung 4 montiert ist und lokal zusammengedrückt, geknickt oder gequetscht ist, dann wird das weitere Einströmen des Prüfmediums durch diese Blockade verhindert, was entsprechend bei der Messung der Durchflussrate Q erkennbar ist. Entsprechend wird vorliegend vor oder zu Beginn der Messzeit t2 während eines initialen Zeitintervalls ti eine Absenkung 18 der Durchflussrate Q bestimmt. Generell wird zu Beginn ein starker Anstieg wie in Fig. 3 gezeigt erwartet, danach dann aber eine Absenkung der Durchflussrate Q, wie ebenfalls in Fig. 3 erkennbar. Falls eine Blockade vorliegt, sinkt die Durchflussrate Q deutlich schneller, die Absenkung 18 ist größer. Das initiale Zeitintervall ti ist vorliegend ein Teil bereits genannten Messzeit t2. Bereits während des initialen Zeitintervalls ti wird dann schon die Durchflussrate Q gemessen, jedoch nicht für die eigentliche Dichtigkeitsprüfung, sondern für eine dieser vorausgehende Blockadeprüfung. Anhand der Absenkung 18 der Durchflussrate Q wir dann ermittelt, ob der Kabelsatz 2 eine Blockade aufweist, welche ein vollständiges Befüllen mit dem Prüfmedium verhindert (Blockadeprüfungsfunktion). Hierzu wird beispielsweise die Absenkung 18 als Änderung der Durchflussrate Q innerhalb des initialen Zeitintervalls ti gemessen. Die Absenkung 18 wird dann mit einem Grenzwert verglichen und je nachdem, ob die Absenkung 18 größer oder kleiner als dieser Grenzwert ist, wird auf eine Blockade geschlossen (größer als Grenzwert) oder nicht (kleiner als Grenzwert) und von der Prüfvorrichtung 4 ein entsprechender Hinweis ausgegeben.

Um möglichst verschiedene Kabelsätze 2 mit derselben Prüfvorrichtung 4 prüfen zu können, weist diese im hier gezeigten Ausführungseispeil mehrere Prüfanschlüsse 6 auf, an welche der Kabelsatz 2 je nach Ausgestaltung desselben dann angeschlossen wird, wobei dann nur solche Prüfanschlüsse 6 freigeschaltet und während der Dichtigkeitsprüfung verwendet werden, an welche der Kabelsatz 2 auch tatsächlich angeschlossen ist. Die Prüfvorrichtung 4 weist hier sogar mehrere Auswahlventile 20 auf und mehrere Prüfanschlüsse 6, welche mittels der Auswahlventile 20 freischaltbar sind, um das Prüfmedium zum jeweiligen Prüfanschluss 6 zu leiten. Der Kabelsatz 2 ist dann lediglich an eine Teilanzahl der Prüfanschlüsse 6 angeschlossen und mittels der Auswahlventile 20 werden vor Beginn der Dichtigkeitsprüfung lediglich diejenigen Prüfanschlüsse 6 freigeschaltet, an welche der Kabelsatz 2 angeschlossen ist. Das Prüfmedium wird dann nur den freigeschalteten Prüfanschlüssen 6 zugeführt, die übrigen Prüfanschlüsse 6 bleiben von der Medienzufuhr 8 getrennt. Beispielsweise erkennt die Prüfvorrichtung 4 automatisch, ob an einem jeweiligen Prüfanschluss 6 ein Kabelsatz 2 angeschlossen ist, z.B. mittels eines Präsenzsensors (nicht gezeigt), welcher ein entsprechendes Präsenzsignal an die Steuereinheit 14 ausgibt, wenn an dem zugehörigen Prüfanschluss 6 ein Kabelsatz 2 angeschlossen ist. Alternativ werden die Auswahlventile 20 manuell geschaltet oder in die Steuereinheit 14 wird eingeben, welcher Kabelsatz 2 geprüft werden soll und dann aus einer Datenbank entnommen, welche Prüfanschlüsse 6 hierfür freigeschaltet sein sollen und diese werden dann freigeschaltet. Die Prüfvorrichtung 4 ermöglicht demnach insgesamt eine Auswahl der zu verwendenden Prüfanschlüsse 6 (Auswahlfunktion) und ist somit zur Prüfung unterschiedlicher Kabelsätze 2 einsetzbar.

Im gezeigten Ausführungsbeispiel sind zumindest zwei der Prüfanschlüsse 6 mittels desselben Auswahlventils 20 freischaltbar, d.h. ein einzelnes Auswahlventil 20 schaltet mehrere Prüfanschlüsse 6. Beispielsweise weist die Prüfvorrichtung 4 wie in Fig. 2 gezeigt vier Auswahlventile 20 auf, welche jeweils mit zwei Prüfanschlüssen 6 verbunden sind, sodass immer je zwei Prüfanschlüsse 6 mit einem einzelnen Auswahlventil 20 freischaltbar sind. Da eine jeweilige Leitung des Kabelsatzes 2 typischerweise zwei Enden aufweist, wird auch nur eine gerade Anzahl an Prüfanschlüssen 6 benötigt.

Vor der eigentlichen Dichtigkeitsprüfung ist es vorteilhaft, die Prüfvorrichtung 4 selbst auf deren korrekte Funktionalität zu prüfen und sicherzustellen, dass Kabelsätze 2 mit mangelhafter Dichtigkeit D zuverlässig erkannt werden. Daher ist in einer Ausgestaltung der Kabelsatz 2 ein Referenzkabelsatz, welcher eine mangelhafte Dichtigkeit D aufweist, und die Prüfvorrichtung 4 wird erst dann zur Prüfung weiterer Kabelsätze 2 freigegeben, wenn im Rahmen der Dichtigkeitsprüfung an dem Referenzkabelsatz dessen mangelhafte Dichtigkeit D erfolgreich erkannt wurde. Der Referenzkabelsatz weist vorsätzlich eine mangelhafte Dichtigkeit D auf, welche derart gestaltet ist, dass die Prüfvorrichtung 4 diese bei korrekter Funktionalität als solche erkennt (also "fail" ausgibt).

Die hier gezeigte Prüfvorrichtung 4 weist auch ein Proportionalventil 22 auf, mit welchem der Prüfdruck pt eingestellt wird. Das Proportionalventil 22 ist im Strömungspfad S zwischen der Medienzufuhr 8 und dem Schaltventil 16 angeordnet. Mit dem Proportionalventil 22 wird je nach Bedarf der Druck, welcher von der Medienzufuhr 8 bereitgestellt wird, auf denjenigen Druck reduziert, welcher für die Dichtigkeitsprüfung eingestellt werden soll. Das Proportionalventil 22 wird hierfür entsprechend von der Steuereinheit 14 gesteuert. Optional ist im Strömungspfad S zwischen der Medienzufuhr 8 und dem Proportionalventil 22 noch ein manuelles Ventil 24 angeordnet, mit welchem der Druck von der Medienzufuhr 8 zunächst grob vorreduziert wird, um dann mit dem Proportionalventil 22 automatisiert feineingestellt zu werden.

Optional weist die Prüfvorrichtung 4 entlang des Strömungspfads S noch eine Druckflasche 26 auf, zur Stabilisierung des Prüfmediums und/oder zur Reduktion von Turbulenzen. Die Druckflasche 26 ist stromauf des Schaltventils 16 angeordnet und stromab des Proportionalventils 22.

Ebenso optional weist die Prüfvorrichtung 4 einen Verriegelungsmechanismus auf 28, mit welchem der Kabelsatz 2 am Prüfanschluss 6 während der Dichtigkeitsprüfung verriegelt wird. Der Verriegelungsmechanismus ist an die Medienzufuhr 8 angeschlossen und wird mittels des Prüfmediums betätigt. Mit dem Verriegelungsmechanismus 28 wird der Kabelsatz 2 an dem jeweiligen Prüfanschluss 6 verriegelt. Der Verriegelungsmechanismus 28 weist hierfür für jeden Prüfanschluss 6 ein Verriegelungselement 30 auf, z.B. einen Hakenzylinder. Der hier gezeigte Verriegelungsmechanismus 28 weist für jeden Prüfanschluss 6 noch ein Schließventil 32 auf. Zum Verriegeln des Kabelsatzes 2 wird ein jeweiliges Schließventil 32 geöffnet und dadurch das jeweilige Verriegelungselement 30 mittels des Prüfmediums betätigt (in Fig. 2 sind die Verbindungen zwischen den Schließventilen 32 und den Verriegelungselemente 30 zur Zuleitung des Prüfmediums aus Gründen der Übersichtlichkeit ausgelassen). Alternativ wird das Verriegelungselement elektrisch betätigt (nicht gezeigt). Eine Entriegelung erfolgt entsprechend umgekehrt.

Im Ausführungsbeispiel der Fig. 2 weist die Prüfvorrichtung 4 zudem stromab der Medienzufuhr 8 noch einen Verteiler 34 auf, mit welchem das Prüfmedium auf die diversen Schließventile 32 und in Richtung der Prüfanschlüsse 6 verteilt wird.

### Bezugszeichenliste

- 2: Kabelsatz
- 4: Prüfvorrichtung
- 6: Prüfanschluss
- 8: Medienzufuhr
- 10: Durchflusssensor
- 12: Messwert
- 14: Steuereinheit
- 16: Schaltventil
- 18: Absenkung
- 20: Auswahlventil
- 22: Proportionalventil
- 24: manuelles Ventil
- 26: Druckflasche
- 28: Verriegelungsmechanismus
- 30: Verriegelungselement
- 32: Schließventil
- 34: Verteiler
- D: Dichtigkeit
- g: Grenzwert
- pf: Fülldruck
- pt: Prüfdruck
- Q: Durchflussrate
- S: Strömungspfad
- S1: erster Schritt
- S2: zweiter Schritt
- S3: dritter Schritt
- t: Zeit
- t1: erster Zeitraum
- t2: zweiter Zeitraum, Messzeit
- ti: initiales Zeitintervall

## Patentansprüche

1. Verfahren zum Prüfen eines Kabelsatzes (2) mittels einer Prüfvorrichtung (4),
a. wobei die Prüfvorrichtung (4) wenigstens einen Prüfanschluss (6) aufweist, an welchen der Kabelsatz (2) angeschlossen ist oder wird,
b. wobei die Prüfvorrichtung (4) eine Medienzufuhr (8) aufweist, um durch den Prüfanschluss (6) ein Prüfmedium in den Kabelsatz (2) zu leiten,
c. wobei die Prüfvorrichtung (4) einen Durchflusssensor (10) aufweist, für eine Dichtigkeitsprüfung, wobei der Durchflusssensor (10) in einem Strömungspfad (S) des Prüfmediums angeordnet ist,
d. wobei mittels des Prüfmediums ein Prüfdruck (pt) für den Kabelsatz (2) eingestellt wird und danach mit dem Durchflusssensor (10) eine Anzahl an Messwerten (12) zu einer Durchflussrate (Q) des Prüfmediums erzeugt wird,
e. wobei anhand der Messwerte (12) eine Dichtigkeit (D) des Kabelsatzes (2) bestimmt wird,
**dadurch gekennzeichnet, dass**
f. die Durchflussrate (Q) mit dem Durchflusssensor (10) während eines Zeitraums (t2) gemessen wird,
g. vor oder zu Beginn des Zeitraums (t2) während eines initialen Zeitintervalls (ti) eine Absenkung (18) der Durchflussrate (Q) bestimmt wird,
h. anhand der Absenkung (18) ermittelt wird, ob der Kabelsatz (4) eine Blockade aufweist, welche ein vollständiges Befüllen mit dem Prüfmedium verhindert.

2. Verfahren nach Anspruch 1,
wobei der Durchflusssensor (10) einen Messbereich von 2 ml/min bis 100 ml/min aufweist, bevorzugt von 2,5 ml/min bis 25 ml/min.

3. Verfahren nach Anspruch 1 oder 2,
wobei die Prüfvorrichtung (4) ein Schaltventil (16) aufweist, welches geöffnet wird, um die Dichtigkeitsprüfung zu starten,
wobei der Durchflusssensor (10) entlang des Strömungspfads (S) zwischen dem Schaltventil (16) und dem wenigstens einen Prüfanschluss (6) angeordnet ist.

4. Verfahren nach einem der Ansprüche 1 bis 3,
wobei die Prüfvorrichtung (4) mehrere Auswahlventile (20) aufweist und mehrere Prüfanschlüsse (6), welche mittels der Auswahlventile (20) freischaltbar sind, um das Prüfmedium zum jeweiligen Prüfanschluss (6) zu leiten,
wobei der Kabelsatz (2) lediglich an eine Teilanzahl der Prüfanschlüsse (6) angeschlossen ist,
wobei mittels der Auswahlventile (20) vor Beginn der Dichtigkeitsprüfung lediglich diejenigen Prüfanschlüsse (6) freigeschaltet werden, an welche der Kabelsatz (2) angeschlossen ist.

5. Verfahren nach Anspruch 4,
wobei zumindest zwei der Prüfanschlüsse (6) mittels desselben Auswahlventils (20) freischaltbar sind.

6. Verfahren nach einem der Ansprüche 1 bis 5,
wobei der Kabelsatz (2) ein Referenzkabelsatz ist, welcher eine mangelhafte Dichtigkeit (D) aufweist,
wobei die Prüfvorrichtung (4) erst dann zur Prüfung weiterer Kabelsätze (2) freigegeben wird, wenn im Rahmen der Dichtigkeitsprüfung an dem Referenzkabelsatz dessen mangelhafte Dichtigkeit (D) erfolgreich erkannt wurde.

7. Verfahren nach einem der Ansprüche 1 bis 6,
wobei die Prüfvorrichtung (4) ein Proportionalventil (22) aufweist, mit welchem der Prüfdruck (pt) eingestellt wird.

8. Verfahren nach einem der Ansprüche 1 bis 7,
wobei die Prüfvorrichtung (4) entlang des Strömungspfads (S) eine Druckflasche (26) aufweist.

9. Verfahren nach einem der Ansprüche 1 bis 8,
wobei die Prüfvorrichtung (4) einen Verriegelungsmechanismus (28) aufweist, mit welchem der Kabelsatz (2) am Prüfanschluss (6) während der Dichtigkeitsprüfung verriegelt wird,
wobei der Verriegelungsmechanismus (28) an die Medienzufuhr (8) angeschlossen ist und mittels des Prüfmediums betätigt wird.

10. Prüfvorrichtung (4),
a. welche wenigstens einen Prüfanschluss (6) aufweist, an welchen ein Kabelsatz (2) angeschlossen ist oder wird,
b. welche eine Medienzufuhr (8) aufweist, um durch den Prüfanschluss (6) ein Prüfmedium in den Kabelsatz (2) zu leiten,
c. welche einen Durchflusssensor (10) aufweist, für eine Dichtigkeitsprüfung, wobei der Durchflusssensor (10) in einem Strömungspfad (S) des Prüfmediums angeordnet ist,
d. welche derart ausgebildet ist, dass
i. mittels des Prüfmediums ein Prüfdruck (pt) für den Kabelsatz (2) eingestellt wird und danach mit dem Durchflusssensor (10) eine Anzahl an Messwerten (12) zu einer Durchflussrate (Q) des Prüfmediums erzeugt wird,
ii. anhand der Messwerte (12) eine Dichtigkeit (D) des Kabelsatzes (2) bestimmt wird,
iii. die Durchflussrate (Q) mit dem Durchflusssensor (10) während eines Zeitraums (t2) gemessen wird,
iv. vor oder zu Beginn des Zeitraums (t2) während eines initialen Zeitintervalls (ti) eine Absenkung (18) der Durchflussrate (Q) bestimmt wird,
v. anhand der Absenkung (18) ermittelt wird, ob der Kabelsatz (4) eine Blockade aufweist, welche ein vollständiges Befüllen mit dem Prüfmedium verhindert.

## Claims

1. Method for testing a cable set (2) using a test device (4),
a. wherein the test device (4) has at least one test terminal (6) to which the cable set (2) is or will be connected,
b. wherein the test device (4) has a medium supply (8) to convey a test medium into the cable set (2) through the test connection (6),
c. wherein the test device (4) has a flow sensor (10) for a leak testing, wherein the flow sensor (10) is disposed in a flow path (S) of the test medium,
d. wherein a test pressure (pt) for the cable set (2) is set using the test medium and then a number of measurement values (12) relating to a flow rate (Q) of the test medium are generated with the flow sensor (10),
e. wherein a tightness (D) of the cable set (2) is determined, based on the measurement values (12),
**characterized in that**
f. the flow rate (Q) is measured with the flow sensor (10) during a time period (t2),
g. before or at the beginning of the time period (t2) during an initial time interval (ti), a reduction (18) of the flow rate (Q) is determined,
h. based on the reduction (18) is determined whether the cable set (4) has a blockage that prevents it from being completely filled with the test medium.

2. The method according to claim 1,
wherein the flow sensor (10) has a measuring range of 2 ml/min to 100 ml/min, preferably from 2.5 ml/min to 25 ml/min.

3. The method according to claim 1 or 2,
wherein the test device (4) has a switching valve (16) which is opened to start the leak test,
wherein the flow sensor (10) is arranged along the flow path (S) between the switching valve (16) and the at least one test connection (6).

4. The method according to any one of claims 1 to 3,
wherein the test device (4) has several selection valves (20) and several test connections (6) which can be activated by means of the selection valves (20) in order to convey the test medium to the respective test connection (6),
wherein the cable set (2) is only connected to a subset of the test connections (6),
wherein, by means of the selection valves (20), only those test connections (6) to which the cable set (2) is connected, are activated before the start of the leak test.

5. The method according to claim 4,
wherein at least two of the test connections (6) can be enabled by means of the same selection valve (20).

6. The method according to any one of claims 1 to 5,
wherein the cable set (2) is a reference cable set which has a defective tightness (D),
wherein the test device (4) is only released for testing further cable sets (2) when, during the leak tightness test of the reference cable set, its defective tightness (D) was successfully detected.

7. The method according to any one of claims 1 to 6,
wherein the test device (4) has a proportional valve (22) with which the test pressure (pt) is set.

8. The method according to any one of claims 1 to 7,
wherein the test device (4) has a pressure vessel (26) along the flow path (S).

9. The method according to any one of claims 1 to 8,
wherein the test device (4) has a locking mechanism (28) with which the cable set (2) is locked at the test connection (6) during the leak test,
wherein the locking mechanism (28) is connected to the media supply (8) and is actuated by means of the test medium.

10. Test device (4),
a. which has at least one test connection (6) to which a cable set (2) is or will be connected,
b. which has a media supply (8) to convey a test medium into the cable set (2) through the test connection (6),
c. which has a flow sensor (10) for leak testing, wherein the flow sensor (10) is disposed in a flow path (S) of the test medium,
d. which is configured such that
i. a test pressure (pt) for the cable set (2) is set using the test medium and then a number of measurement values (12) relating to a flow rate (Q) of the test medium are generated with the flow sensor (10),
ii. the tightness (D) of the cable set (2) is determined, based on the measurement values (12),
iii. the flow rate (Q) is measured by the flow sensor (10) during a period of time (t2),
iv. before or at the beginning of the time period (t2) during an initial time interval (ti), a reduction (18) of the flow rate (Q) is determined,
v. based on the reduction (18) is determined whether the cable set (4) has a blockage that prevents it from being completely filled with the test medium.

## Revendications

1. Procédé de contrôle d'un faisceau de câbles (2) au moyen d'un dispositif de contrôle (4),
a. dans lequel le dispositif de contrôle (4) comporte au moins un raccord de contrôle (6) auquel le faisceau de câbles (2) est ou sera raccordé,
b. dans lequel le dispositif de contrôle (4) comporte une alimentation (8) en fluide pour acheminer un fluide de contrôle dans le faisceau de câbles (2) à travers le raccord de contrôle (6),
c. dans lequel le dispositif de contrôle (4) comporte un capteur de débit (10) pour un contrôle d'étanchéité, le capteur de débit (10) étant disposé dans un circuit d'écoulement (S) du fluide de contrôle,
d. dans lequel au moyen du fluide de contrôle une pression de contrôle (pt) est réglée pour le faisceau de câbles (2) et ensuite un certain nombre de valeurs mesurées (12) relatives à un débit (Q) du fluide de contrôle sont générées par le capteur de débit (10),
e. dans lequel une étanchéité (D) du faisceau de câbles (2) est déterminée à l'aide des valeurs mesurées (12),
**caractérisé en ce que**
f. le débit (Q) est mesuré par le capteur de débit (10) pendant une période (t2),
g. avant ou au début de la période (t2), pendant un intervalle de temps initial (ti), une diminution (18) du débit (Q) est déterminée,
h. à l'aide de la diminution (18) il est déterminé si le faisceau de câbles (4) présente un blocage qui empêche un remplissage complet avec le fluide de contrôle.

2. Procédé selon la revendication 1,
dans lequel le capteur de débit (10) présente une plage de mesure de 2 ml/min à 100 ml/min, de préférence de 2,5 ml/min à 25 ml/min.

3. Procédé selon la revendication 1 ou 2,
dans lequel le dispositif de contrôle (4) comporte une vanne de commutation (16) qui est ouverte pour démarrer le contrôle d'étanchéité,
le capteur de débit (10) étant disposé le long du circuit d'écoulement (S) entre la vanne de commutation (16) et ledit au moins un raccord de contrôle (6).

4. Procédé selon l'une quelconque des revendications 1 à 3,
dans lequel le dispositif de contrôle (4) comporte plusieurs vannes de sélection (20) et plusieurs raccords de contrôle (6) qui peuvent être mis en circuit au moyen des vannes de sélection (20) afin d'acheminer le fluide de contrôle vers le raccord de contrôle (6) respectif,
dans lequel le faisceau de câbles (2) n'est raccordé qu'à un nombre partiel des raccords de contrôle (6),
dans lequel au moyen des vannes de sélection (20) ne sont mis en circuit avant le début du contrôle d'étanchéité que les raccords de contrôle (6) auxquels est raccordé le faisceau de câbles (2).

5. Procédé selon la revendication 4,
dans lequel au moins deux des raccords de contrôle (6) peuvent être mis en circuit au moyen de la même vanne de sélection (20).

6. Procédé selon l'une quelconque des revendications 1 à 5,
dans lequel le faisceau de câbles (2) est un faisceau de câbles de référence qui présente une étanchéité (D) insuffisante,
le dispositif de contrôle (4) n'étant alors libéré pour le contrôle d'autres faisceaux de câbles (2) que lorsque, dans le cadre du contrôle d'étanchéité effectué sur le faisceau de câbles de référence, son étanchéité insuffisante (D) a été détectée avec succès.

7. Procédé selon l'une quelconque des revendications 1 à 6,
dans lequel le dispositif de contrôle (4) comporte une vanne proportionnelle (22) avec laquelle la pression de contrôle (pt) est réglée.

8. Procédé selon l'une quelconque des revendications 1 à 7,
dans lequel le dispositif de contrôle (4) comporte une bouteille sous pression (26) le long du circuit d'écoulement (S).

9. Procédé selon l'une quelconque des revendications 1 à 8,
dans lequel le dispositif de contrôle (4) comporte un mécanisme de verrouillage (28) avec lequel le faisceau de câbles (2) est verrouillé au niveau du raccord de contrôle (6) pendant le contrôle d'étanchéité,
le mécanisme de verrouillage (28) étant raccordé à l'alimentation (8) en fluide et actionné au moyen du fluide de contrôle.

10. Dispositif de contrôle (4)
a. qui comporte au moins un raccord de contrôle (6) auquel un faisceau de câbles (2) est ou sera raccordé,
b. qui comporte une alimentation (8) en fluide pour acheminer un fluide de contrôle dans le faisceau de câbles (2) à travers le raccord de contrôle (6),
c. qui comporte un capteur de débit (10) pour un contrôle d'étanchéité, le capteur de débit (10) étant disposé dans un circuit d'écoulement (S) du fluide de contrôle,
d. qui est configuré de façon telle que
i. une pression de contrôle (pt) est réglée pour le faisceau de câbles (2) à l'aide du fluide de contrôle et ensuite un certain nombre de valeurs mesurées (12) relatives à un débit (Q) du fluide de contrôle sont générées par le capteur de débit (10),
ii. une étanchéité (D) du faisceau de câbles (2) est déterminée à l'aide des valeurs mesurées (12),
iii. le débit (Q) est mesuré par le capteur de débit (10) pendant une période (t2),
iv. avant ou au début de la période (t2), une diminution (18) du débit (Q) est déterminée pendant un intervalle de temps initial (ti),
v. à l'aide de la diminution (18) il est déterminé si le faisceau de câbles (4) présente un blocage qui empêche un remplissage complet avec le fluide de contrôle.
